## Europäisches Patentamt

## European Patent Office

## Office européen des brevets

(19)

(11) Numéro de publication: **0 078 488**
**B1**

(12)

# FASCICULE DE BREVET EUROPEEN

(45) Date de publication du fascicule du brevet:
**23.04.86**

(51) Int. Cl.⁴: **C 03 C 21/00**, C 03 C 23/00

(21) Numéro de dépôt: **82109874.6**

(22) Date de dépôt: **26.10.82**

(54) Procédé de fabrication d'un diélectrique en verre trempé pour isolateur électrique et isolateur en résultant.

(30) Priorité: **29.10.81 FR 8120297**

(43) Date de publication de la demande:
**11.05.83 Bulletin 83/19**

(45) Mention de la délivrance du brevet:
**23.04.86 Bulletin 86/17**

(84) Etats contractants désignés:
**AT BE CH DE FR GB IT LI LU NL SE**

(56) Documents cités:
**FR - A - 1 411 300**
**FR - A - 1 463 273**
**FR - A - 1 502 380**
**FR - A - 2 167 623**

(73) Titulaire: **CERAVER Société anonyme dite:, 12, rue de la Baume, F-75008 Paris (FR)**

(72) Inventeur: **Pargamin, Laurent, 18, rue de la Source de l'Hospital, F-03200 Vichy (FR)**
Inventeur: **Parent, Jean-Paul, Résidence "La Prairie" Bât. C6, F-91290 Arpajon (FR)**
Inventeur: **Saisse, Henri, 15, rue Pasteur, F-91000 Bondoufle (FR)**
Inventeur: **Cornebois, Michel, 18, rue Latérale, F-94000 Créteil (FR)**

(74) Mandataire: **Weinmiller, Jürgen et al, Zeppelinstrasse 63, D-8000 München 80 (DE)**

## Description

La présente invention concerne un procédé de fabrication d'un diélectrique en verre trempé pour isolateur électrique et un isolateur en résultant, l'épaisseur moyenne du verre étant de l'ordre de 10 mm.

Selon le procédé habituellement utilisé, les diélectriques en verre subissent un traitement de trempe thermique tel qu'ils présentent en surface d'importantes contraintes de compression, et intérieurement d'importantes contraintes d'extension. Il en résulte pour le diélectrique une résistance mécanique très améliorée par rapport à celle du verre recuit et en particulier une excellente résistance à la traction. Toutefois on constate que, dans certaines circonstances, par exemple en cas de choc violent, l'existence des contraintes internes importantes entraîne une fragmentation quasiment totale du diélectrique; ceci n'affecte pas notablement ni dangereusement la résistance mécanique résiduelle de l'isolateur, mais réduit sa ligne de fuite à la distance dans l'air entre les électrodes.

Pour des produits en verre mince, du genre gobelets en verre ou glaces, ayant subi une trempe thermique, on a envisagé de leur faire subir ensuite une trempe chimique; ceci est proposé dans les documents FR-A-1 502 380 et 1 411 300. Mais les contraintes de trempe thermique initiales et les contraintes de trempe chimique sont telles que les contraintes d'extension internes finales sont supérieures aux contraintes internes initiales. Un tel traitement n'est donc pas applicable aux isolateurs.

La présente invention a pour but de réaliser un diélectrique d'isolateur susceptible de mieux résister aux chocs, tout en conservant sa résistance à la traction.

Ce but est atteint par le procédé conforme à la revendication 1, caractérisé par le fait que le diélectrique subit en premier lieu une trempe thermique lui imprimant des contraintes externes de compression dont les valeurs maximales sont comprises entre 200 MPa et 400 MPa, et qu'il subit en second lieu, au moins partiellement, une trempe chimique dans des conditions de durée et de températures telles qu'elles entraînent un relâchement desdites contraintes externes de compression dûes à la trempe thermique compris entre 50 et 80% afin d'aboutir à une zone interne en extension où les contraintes d'extension maximales soient comprises entre 10 et 50 MPa.

En ce qui concerne certaines caractéristiques préférées de ce procédé, référence est faite aux revendications dépendantes 2 à 5.

La présente invention a également pour objet un isolateur électrique dont le diélectrique a été obtenu par le procédé précité. Ce diélectrique est caractérisé par le fait qu'il présente en surface au niveau de la partie traitée une zone en compression dont l'épaisseur est supérieure à 1 mm, les contraintes de compression maximales étant comprises entre 200 MPa et 500 MPa, et qu'il présente intérieurement une zone en extension, les contraintes maximales d'extension étant comprises entre 10 et 50 MPa.

L'invention sera décrite ci-après plus en détails à l'aide d'exemples de mise en œuvre du procédé appliqué à une lame d'un verre sodocalcique dont l'épaisseur e est en moyenne de 10 mm.

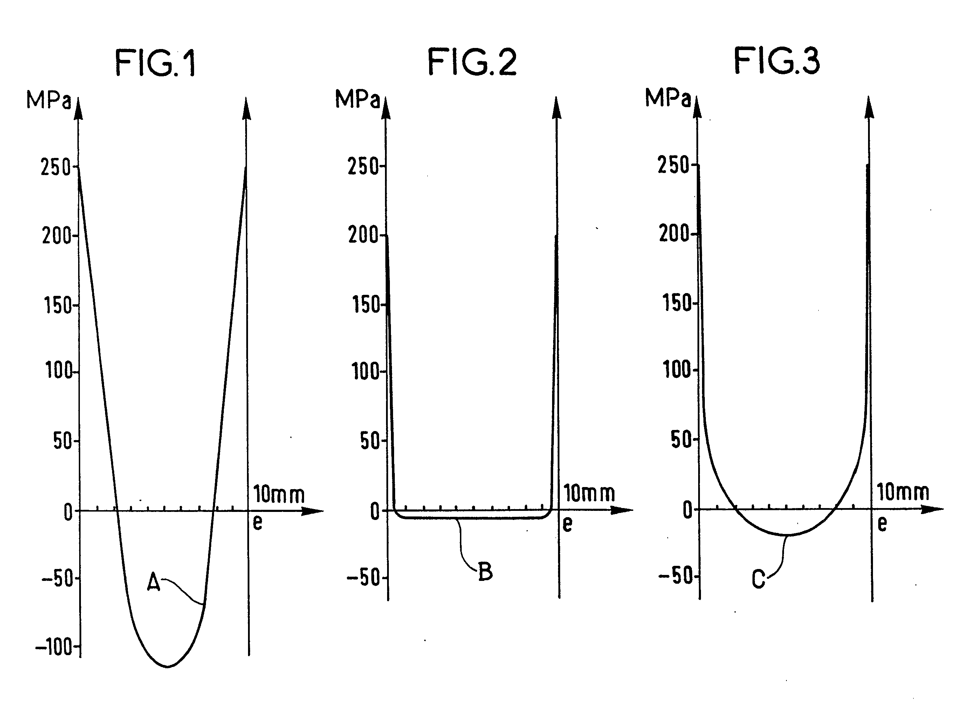

Les figures 1, 2, 3 annexées montrent respectivement les courbes de répartition des contraintes (en Mega Pascal) dans trois échantillons A, B, C:

- l'échantillon A a subi une trempe thermique conformément à l'art antérieur,
- l'échantillon B a subi une trempe chimique,
- l'échantillon C a subi une trempe thermique comme l'échantillon A, suivie d'une trempe chimique comme l'échantillon B.

L'échantillon A a subi une trempe thermique par soufflage d'air sous pression; la courbe A indique la répartition des contraintes d'extension et de compression dans le diélectrique A.

L'échantillon B a subi une trempe chimique dans les conditions suivantes; on a plongé l'échantillon recuit dans une solution à la température ambiante et présentant la composition ci-dessous:

| | |
|---|---|
| $H_2O$ | 77% |
| Amidon | 3% |
| $KNO_3$ | 8% |
| $K_2HPO_4$ | 12% |

Cette solution mouille très bien le verre et le diélectrique est complètement recouvert d'un film liquide dont on peut contrôler la viscosité. On effectue une opération de séchage puis un traitement thermique pendant 8 heures à la température de 450°C.

On voit sur le courbe B de la figure 2 la répartition des contraintes d'extension et de compression dans le diélectrique B.

L'échantillon C a subi un traitement thermique analogue au traitement subi par A, puis un traitement chimique analogue au traitement subi par B. On obtient, comme l'indique la courbe C, une répartition de contraintes particulièrement intéressante, qui diffère sensiblement de la somme algébrique des contraintes A et B et qui confère à l'échantillon C les propriétés mécaniques recherchées: d'une part les contraintes internes d'extension sont assez faibles pour éviter une fragmentation en cas de choc violent, d'autre part les contraintes externes de compression sont assez fortes et profondes pour que la pièce résiste bien aux efforts de traction.

Bien entendu les conditions de trempe thermique et chimique ne sont pas limitées à l'exemple décrit.

Les conditions de trempe thermique peuvent varier suivant la composition du verre, la température et l'hygrométrie de l'air de soufflage.

La solution utilisée pour la trempe chimique peut être choisie parmi les compositions suivantes (pourcentages donnés en poids):

| | |
|---|---|
| H$_2$O | 70% à 90% |
| Amidon | 2% à 10% |
| KNO$_3$ | 4% à 12% |
| K$_2$HPO$_4$ + KCl + K$_2$SO$_4$ | 4% à 20% |

L'amidon peut être remplacé par tout liant équivalent, du type colle émulsifiable.

Le chauffage peut durer quelques heures et la température peut être comprise entre 300°C et 500°C.

On obtient en modifiant donc les conditions opératoires trois types diélectriques A', B', C' dont les caractéristiques mécaniques sont consignées dans le tableau I ci-dessous:

Tableau I

| | Contraintes internes maximales d'extension (Mega Pascal) | Contraintes externes maximales de compression (Mega Pascal) | Epaisseur de la zone en compression |
|---|---|---|---|
| Diélectrique trempé thermiquement A' | supérieure à 100 MPa | 200 à 400 MPa | supérieure à 1 mm |
| Diélectrique trempé chimiquement B' | inférieures à 10 MPa | 100 à 300 MPa | 20 μm à 100 μm |
| Diélectrique trempé thermiquement puis chimiquement C' | 10 à 50 MPa | 200 MPa à 500 MPa | supérieure à 1 mm |

Remarquons que le procédé de trempe chimique mis en œuvre dans le cadre de l'invention est un procédé industriel présentant les avantages suivants:

- utilisation de faibles quantités de sels alcalins et de liant organique puisque le produit de départ est une solution,
- très bonne adhérence du film après séchage, ce qui permet une manipulation aisée des pièces traitées,
- les profondeurs de diffusion ionique dans le verre sont comparables à celles obtenues par les autres procédés connus de trempe chimique par exemple:

- pulvérisation d'un mélange de sels en poudre porté ensuite à une température suffisante pour faire fondre une partie de la poudre,
- pulvérisation d'une solution chaude et saturée en réactif sur le diélectrique froid.

Quels que soient les détails de mise en œuvre du procédé selon l'invention, le diélectrique C' obtenu a des caractéristiques mécaniques du même type que celles du diélectrique C.

Selon un perfectionnement du procédé on peut encore renforcer les échanges ioniques de la trempe chimique en appliquant pendant le traitement un champ électrique aux zones traitées.

Enfin, comme on l'a dit plus haut l'isolateur peut subir dans son entier le traitement selon l'invention; selon une autre variante seules les parties susceptibles de recevoir des chocs violents sont soumis à la double trempe.

**Revendications**

1. Procédé de fabrication d'un diélectrique en verre trempé pour isolateur électrique, l'épaisseur moyenne du verre étant de l'ordre de 10 mm, caractérise par le fait que ledit diélectrique subit en premier lieu une trempe thermique lui imprimant des contraintes externes de compression dont les valeurs maximales sont comprises entre 200 MPa et 400 MPa, et qu'il subit en second lieu, au moins partiellement, une trempe chimique dans des conditions de durée et de température telles qu'elles entraînent un relâchement desdites contraintes externes de compression dûes à la trempe thermique compris entre 50% et 80% afin d'aboutir à une zone interne en extension où les contraintes d'extension maximales soient comprises entre 10 et 50 MPa.

2. Procédé de fabrication selon la revendication 1, caractérisé par le fait que, pour effectueur ladite trempe chimique, on applique sur ladite partie du diélectrique une solution à base de sels alcalins à température ambiante, on la sèche, puis on la chauffe pendant quelques heures à une température comprise entre 300°C et 500°C.

3. Procédé de fabrication selon l'une des revendications précédentes, caractérisé par le fait que, pendant le traitement de trempe chimique, on soumet lesdites zones à un champ électrique.

4. Procédé de fabrication selon la revendication 2, caractérisé par le fait que ladite solution à base de sels alcalins a une composition de type suivant (pourcentages en poids):

| | |
|---|---|
| H$_2$O | 70% à 90% |
| Amidon | 2% à 10% |
| KNO$_3$ | 4% à 12% |
| K$_2$HPO$_4$ + KCl + K$_2$SO$_4$ | 4% à 20% |

5. Procédé de fabrication selon la revendication 4, caractérisé par le fait que ladite solution répond à la composition suivante (pourcentages en poids):

| | |
|---|---|
| $H_2O$ | 77% |
| Amidon | 3% |
| $KNO_3$ | 8% |
| $K_2HPO_4$ | 12% |

6. Isolateur électrique comportant un diélectrique en verre dont l'épaisseur moyenne est de l'ordre de 10 mm, ledit diélectrique ayant subi en premier lieu une trempe thermique lui ayant imprimé des contraintes externes de compression dont les valeurs maximales sont comprises entre 200 MPa et 400 MPa, caractérisé par le fait que, après avoir subi en second lieu, au moins sur une partie de sa surface, une trempe chimique dans des conditions de durée et de températures telles qu'elles entraînent un relâchement desdites contraintes externes de compression compris entre 50% et 80%, ledit diélectrique présente en surface au niveau de ladite partie traitée une zone en compression dont l'épaisseur est supérieure à 1 mm, les contraintes de compression maximales étant comprises entre 200 MPa et 500 MPa, et qu'il présente intérieurement une zone en extension, les contraintes maximales d'extension étant comprises entre 10 et 50 MPa.

**Patentansprüche**

1. Verfahren zur Herstellung eines Dielektrikums aus gehärtetem Glas für einen elektrischen Isolator, wobei die mittlere Dicke des Glases etwa 10 mm beträgt, dadurch gekennzeichnet, dass das Dielektrikum zuerst einer Wärmehärtung unterzogen wird, die ihm äussere Kompressionsspannungen verleiht, deren maximale Werte zwischen 200 MPa und 400 MPa liegen, und dass es danach zumindest teilweise einer chemischen Härtung während einer solchen Zeitdauer und unter solchen Temperaturbedingungen unterzogen wird, dass sie ein Nachlassen der äusseren, auf die Wärmehärtung zurückzuführenden Kompressionsspannungen um zwischen 50% und 80% bewirken, um zu einer inneren Dehnungszone zu gelangen, in der die maximalen Dehnungsspannungen zwischen 10 und 50 MPa liegen.

2. Herstellungsverfahren nach Anspruch 1, dadurch gekennzeichnet, dass man, um die chemische Härtung durchzuführen, auf den genannten Bereich des Dielektrikums eine Lösung auf der Basis von Alkalisalzen bei Umgebungstemperatur aufbringt, sie trocknet und dann während mehrerer Stunden auf eine Temperatur von zwischen 300°C und 500°C erhitzt.

3. Herstellungsverfahren nach einem der vorstehenden Ansprüche, dadurch gekennzeichnet, dass man während der chemischen Härtungsbehandlung diese Zonen einem elektrischen Feld unterwirft.

4. Herstellungsverfahren nach Anspruch 2, dadurch gekennzeichnet, dass die Lösung auf der Basis von Alkalisalzen eine Zusammensetzung des folgenden Typs hat (in Gewichtsprozent):

| | |
|---|---|
| $H_2O$ | 70% bis 90% |
| Stärke | 2% bis 10% |
| $KNO_3$ | 4% bis 12% |
| $K_2HPO_4 + KCl + K_2SO_4$ | 4% bis 20%. |

5. Herstellungsverfahren nach Anspruch 4, dadurch gekennzeichnet, dass die Lösung der folgenden Zusammensetzung entspricht (in Gewichtsprozent):

| | |
|---|---|
| $H_2O$ | 77% |
| Stärke | 3% |
| $KNO_3$ | 8% |
| $K_2HPO_4$ | 12% |

6. Elektrischer Isolator, der ein Glasdielektrikum aufweist, dessen mittlere Dicke etwa 10 mm beträgt, wobei das Dielektrikum zuerst einer Wärmehärtung unterzogen wurde, die ihm äussere Kompressionsspannungen aufgeprägt hat, deren maximale Werte zwischen 200 MPa und 400 MPa liegen, dadurch gekennzeichnet, dass dieses Dielektrikum, nachdem es anschliessend auf mindestens einem Teil seiner Oberfläche einer chemischen Härtung während einer solchen Zeitdauer und unter solchen Temperaturbedingungen unterzogen wurde, dass ein Nachlassen der äusseren Kompressionsspannungen um zwischen 50% und 80% bewirkt wird, an der Oberfläche in Höhe des genannten behandelten Teils eine Kompressionszone aufweist, deren Dicke grösser als 1 mm ist, wobei die maximalen Kompressionsspannungen zwischen 200 MPa und 500 MPa liegen, und dass er innen einen Dehnungsbereich aufweist, wobei die maximalen Dehnungsspannungen zwischen 10 und 50 MPa liegen.

**Claims**

1. A method of manufacturing a tempered glass dielectric material for an electrical insulator, the mean glass thickness being of the order of 10 mm, characterized in that said dielectric material is first subjected to a thermal tempering treatment supplying it with external compression tensions, the maximal values of which are comprised between 200 MPa and 400 MPa, and that it is then submitted, at least partially, to a chemical tempering treatment under such time and temperature conditions that they result in a lessening of said external compression tension due to the thermal tempering treatment comprised between 50% and 80%, in order to obtain an internal extension zone in which the maximum extensions tensions are comprised between 10 and 50 MPa.

2. A method of manufacturing according to claim 1, characterized in that, in order to execute said chemical tempering treatment, a solution on the basis of alkaline salts is applied at room temperature on said part of the dielectric material and then said part is heated during several hours at a temperature comprised between 300°C and 500°C.

3. A method of manufacturing according to one of the preceding claims, characterized in that, during the chemical tempering treatment, said zones are submitted to an electrical field.

4. A method of manufacturing according to claim 2, characterized in that said solution on the basis of alkaline salts has a composition of the following type (in weight percent):

| | |
|---|---|
| $H_2O$ | 70% to 90% |
| Starch | 2% to 10% |
| $KNO_3$ | 4% to 12% |
| $K_2HPO_4 + KCl + K_2SO_4$ | 4% to 20%. |

5. A method of manufacturing according to claim 4, characterized in that said solution corresponds to the following composition (in weight percent):

| | |
|---|---|
| $H_2O$ | 77% |
| Starch | 3% |
| $KNO_3$ | 8% |
| $K_2HPOP_4$ | 12% |

6. An electrical insulator comprising a glass dielectric material, the mean thickness of which is of about 10 mm, said dielectric material having first been submitted to a thermal tempering treatment producing external compression tensions, the maximum values of which are comprised between 200 MPa and 400 MPa, characterized in that, after having then been submitted, on at least part of its surface, to a chemical tempering treatment under such duration and temperature conditions that they result in a lessening of said external compression tensions comprised between 50% and 80%, said dielectric material presents a compression zone on its surface at the level of said treated part, the thickness of this zone being larger than 1 mm, the maximum compression tensions being comprised between 200 MPa and 500 MPa, and in that it presents an inner extension zone, the maximum extension tensions being comprised between 10 and 50 MPa.

FIG.1    FIG.2    FIG.3

0 078 488